# EUROPÄISCHE PATENTSCHRIFT

(11) **EP 1 482 580 B1**
(45) Veröffentlichungstag und Bekanntmachung des Hinweises auf die Patenterteilung: **10.02.2010**
(21) Anmeldenummer: 04005744.0
(22) Anmeldetag: 11.03.2004
(51) Int. Cl.: H01M 2/20

(54) **Verwendung eines Blei-Säure-Akkumulators**
Use of a lead-acid battery
Utilisation d'un accumulateur de plomb-acide

(30) Priorität: 15.04.2003 DE 20306094 U
(43) Veröffentlichungstag der Anmeldung: 01.12.2004
(73) Patentinhaber: HAWKER GmbH, 58089 Hagen (DE)
(72) Erfinder: Bittihn, Rainer, Dr., 58553 Halver (DE); Nicolaus, Heinz, 59075 Hamm (DE)
(74) Vertreter: Köchling, Conrad-Joachim

(56) Entgegenhaltungen:
- US-A- 3 852 111
- PATENT ABSTRACTS OF JAPAN Bd. 1998, Nr. 13, 30. November 1998 (1998-11-30) & JP 10 214614 A (JAPAN STORAGE BATTERY CO LTD), 11. August 1998 (1998-08-11)
- PATENT ABSTRACTS OF JAPAN Bd. 2002, Nr. 06, 4. Juni 2002 (2002-06-04) & JP 2002 042886 A (MITSUBISHI ELECTRIC CORP), 8. Februar 2002 (2002-02-08)

## Beschreibung

Die Erfindung betrifft die Verwendung eines Blei-Säure-Akkumulators, in dem eine Vielzahl von Zellen mit jeweils durch Polbrücken verbundenen positiven und negativen Plattensätzen über Pole und Zellenverbinder verschaltet und angeschlossen werden.

U-Boot-Fahrbatterien ermöglichen das Fahren von U-Booten im getauchten Zustand. Der Betreiber ist an zunehmend höheren Batteriekapazitäten interessiert, um möglichst lange Tauchzeiten realisieren zu können. Insbesondere bei Ersatzbatterien für vorhandene U-Boote kann dieser Wunsch im Widerspruch zu den Möglichkeiten stehen, die die elektrische Fahranlage des Bootes vorgeben.

Es ist bekannt, dass bei Batterien deren Kapazität im umgekehrten Verhältnis zu deren Innenwiderstand steht, das heißt, je höher die Kapazität einer Batterie ist, desto geringer ist ihr Innenwiderstand. Der Innenwiderstand wiederum ist ein Maß für den Kurzschlussstrom der Batterie. Der Kurzschlussstrom steht im umgekehrten Verhältnis zum Innenwiderstand der Batterie, das heißt, je geringer der Innenwiderstand der Batterie ist, um so höher ist der Kurzschlussstrom. Entsprechend diesen Gegebenheiten geht eine Erhöhung der Kapazität einer Batterie mit einer Absenkung des Innenwiderstandes und damit einer Anhebung des Kurzschlussstromes einher.

Der aus Sicherheitsgründen auf einem vorhandenen U-Boot maximal erlaubte Kurzschlussstrom hängt von der bootsseitig vorgegebenen elektrischen Installation ab und kann durch vom Betreiber gewünschte Erhöhung der Batteriekapazität überschritten werden. In diesem Falle kann keine Kapazitätserhöhung der Batterie vorgenommen werden, ohne die elektrische Anlage des Bootes in Bezug auf deren Kurzschlussfestigkeit anzupassen. Eine solche Maßnahme kann extrem kostenintensiv sein oder aus Platzgründen (größere Sicherungen, größere Abstände der Starkstromschienen) gar unmöglich sein.

Aus der US-A-3 852 111 ist es bekannt, bei elektrochemischen Generatoren Einsätze mit höherem elektrischem Widerstand als Kupfer zur Strombegrenzung zu verwenden und diese vorwiderstände in die einzelnen Zellen selbst zu integrieren.

Beim PATENT ABSTRACTS OF JAPAN Bd. 2002, Nr.: 06, 04. Juni 2002 ist die Verwendung von Material mit höherem Widerstand für den Fall, dass eine durch einen hohen Kurzschlussstrom bewirkte Temperaturerhöhung auftritt, beschrieben.

Die US-A-5 415 948 beschreibt Stromverbinder, deren Form und Material so ausgewählt wird, dass im Fall eines Kurzschlusses der Strom in diesen Bereichen begrenzt wird.

Ausgehend von diesem Stand der Technik liegt der Erfindung die Aufgabe zugrunde, einen Blei-Säure-Akkumulator dieser Art einer neuen Verwendung zuzuführen.

Zur Lösung dieser Aufgabe schlägt die Erfindung die Verwendung eines solchen Akkumulators als Fahrbatterie in U-Booten vor.

Bevorzugte Weiterbildungen sind in den Unteransprüchen angegeben.

Dabei werden die Pole und/oder Polbrücken vorzugsweise aus Werkstoffen mit niedrigerer spezifischer Leitfähigkeit als Kupfer ausgeführt.

Hierzu kommen leitfähige Materialien wie Eisen, Stahl oder vorzugsweise Messing zum Einsatz.

Alternativ oder in Verbindung mit diesen zelleninternen Maßnahmen können auch einige oder alle Verbinderelemente, die gemäß Stand der Technik in Kupfer ausgeführt sind, aus Materialien niedrigerer spezifischer Leitfähigkeit eingesetzt werden, um so als kurzschlussstrombegrenzende Elemente zu wirken. Die Auswahl der zu Kupfer alternativ einzusetzenden Materialien richtet sich nach dem bootsseitig vorgegebenen Kurzschlussstrom und kann von Fall zu Fall ausgewählt werden, um die Batterie optimal an die bootsseitigen Limitierungen anzupassen.

Die realisierte Kurzschlussstrombegrenzung erlaubt es dem Batteriehersteller gegebene Zellkonstruktionen hinsichtlich deren Kapazitätsinhalten zu optimieren und bei unveränderter geometrischer Konstruktion deren Innenwiderstände und damit Kurzschlussströme anzupassen. Insbesondere ist es für den Anwender möglich, eine genaue Anpassung vorzunehmen, indem beispielsweise einige der in hoher Anzahl vorhandenen Zellenverbinder aus dem entsprechenden Material eingesetzt werden, so dass durch die entsprechende Anzahl von Zellenverbindern aus dem erfindungsgemäßen Material ein entsprechender gewünschter Innenwiderstand und damit Kurzschlussstrom eingestellt werden kann.

## Patentansprüche

1. Verwendung eines Blei-Säure-Akkumulators, in dem eine Vielzahl von Zellen mit jeweils durch Polbrücken verbundenen positiven und negativen Plattensätzen über Pole und Zellenverbinder verschaltet und angeschlossen sind, wobei die Polbrücken und/oder Pole und/oder einige oder alle Zellenverbinder aus Werkstoffen mit niedriger spezifischer Leitfähigkeit, insbesondere niedrigerer Leitfähigkeit als Kupfer, bestehen, als Fahrbatterie in U-Booten.

2. Verwendung nach Anspruch 1, wobei die Elemente aus Eisen, Stahl und/oder vorzugsweise Messing bestehen.

3. Verwendung nach einem der Ansprüche 1 oder 2, wobei auch oder alternativ einige oder alle externen Verbindungselemente, Anschlüsse und/oder Anschlussleitungen aus dem Material gemäß Anspruch 1 oder 2 bestehen.

## Claims

1. Use of a lead-acid battery as propulsion battery in submarines, wherein a plurality of cells comprising positive and negative plate sections each coupled via connectors are connected and formed into a circuit by means of terminals and cell links, **characterized in that** the connectors and/or terminals and/or some or all the cell links are made of materials having low specific conductivity, in particular conductivity lower than copper.

2. Use according to claim 1, **characterized in that** the parts are made of iron, steel and/or preferably brass.

3. Use according to anyone of claims 1 to 2, **characterized in that** also or alternatively some or all the external connections, terminals and/or connecting cables are made of the material in accordance with claim 1 or 2.

## Revendications

1. Utilisation, comme batterie de déplacement dans des sous-marins, d'un accumulateur au plomb-acide, dans lequel une pluralité d'éléments pourvus de piles de plaques positives et négatives respectivement reliées par des ponts polaires sont connectés et raccordés au moyen de pôles et de connecteurs d'éléments, sachant que les ponts polaires et/ou les pôles et/ou certains ou la totalité des connecteurs d'éléments sont constitués de matériaux présentant une faible conductivité, en particulier une plus faible conductivité que le cuivre.

2. Utilisation selon la revendication 1, sachant que les éléments sont constitués de fer, d'acier et/ou de préférence de laiton.

3. Utilisation selon la revendication 1 ou 2, sachant qu'également ou alternativement, certains ou la totalité des éléments de liaison, raccords et/ou lignes de raccordement externes sont constitués du matériau selon la revendication 1 ou 2.
